# EUROPÄISCHE PATENTSCHRIFT

(11) **EP 2 288 459 B1**
(45) Veröffentlichungstag und Bekanntmachung des Hinweises auf die Patenterteilung: **16.05.2012**
(21) Anmeldenummer: 09753629.6
(22) Anmeldetag: 19.05.2009
(51) Int. Cl.: B23C 5/24

(54) **WERKZEUGKASSETTE**
TOOL HOLDER
MAGASIN D'OUTILS

(30) Priorität: 30.05.2008 DE 102008026090
(43) Veröffentlichungstag der Anmeldung: 02.03.2011
(73) Patentinhaber: Kennametal Inc., Latrobe, PA 15650-0231 (US)
(72) Erfinder: MERGENTHALER, Peter, Karl, 91477 Markt Bibart (DE)
(74) Vertreter: FDST Patentanwälte
(86) Internationale Anmeldenummer: PCT/EP2009/003533
(87) Internationale Veröffentlichungsnummer: WO 2009/143974

(56) Entgegenhaltungen:
- EP-A- 0 835 709
- DE-A1-102005 045 751

## Beschreibung

### Hintergrund der Erfindung:

Die Erfindung betrifft eine Werkzeugkassette zum Einsetzen in ein Trägerwerkzeug einer Werkzeugmaschine. Derartige Werkzeugkassetten dienen zum Einsatz verschiedener auswechselbarer Werkzeuge in Werkzeugmaschinen. Die Werkzeugkassette weist eine Aufnahme für einen auswechselbaren Schneideinsatz auf. Dieser Schneideinsatz kann beispielsweise als Schneidplatte oder Wendeschneidplatte konfiguriert sein. Gemeinsam mit der Kassette ist der Schneideinsatz wiederum in einem Kassettensitz eines Trägerwerkzeugs fixiert. Das Trägerwerkzeug ist wiederum in einer Werkzeugmaschine gespannt. Die Werkzeugkassette dient folglich als mittelbare Aufnahme für den Schneideinsatz im Trägerwerkzeug der Werkzeugmaschine. Eine Wekzeugkassette gemäß dem Oberbegriff von Anspruch 1 ist aus der EP0835709 bekannt.

Infolge dieser mittelbaren Anbringung des Schneideinsatzes im Trägerwerkzeug ist die Möglichkeit der Feinjustierung der Kassette gegenüber dem Kassettensitz erforderlich. Nach dem Stand der Technik erfolgt diese Einstellbarkeit im Kassettensitz mit Hilfe von Klemmelementen oder Zwischenstücken oder am Kassettensitz fixierten Einstellelementen.

### Aufgabe der Erfindung:

Ausgehend vom Stand der Technik liegt der Erfindung die Aufgabe zugrunde, eine Werkzeugkassette hinsichtlich ihrer Einstellbarkeit gegenüber dem Kassettensitz zu vereinfachen.

### Lösung der Aufgabe:

Die Aufgabe wird durch eine Werkzeugkassette gemäß Anspruch 1 gelöst.

Die Lösung der Aufgabe besteht nach der Erfindung darin, mindestens ein Einstellelement an der Werkzeugkassette selbst vorzusehen, welches geeignet ist, die Position der Werkzeugkassette gegenüber dem Kassettensitz einzustellen, insbesondere fein zu justieren. Dabei hat die Verwendung einer Stellschraube als Einstellelement den Vorteil, dass zunächst dieselben Schraubendreher oder Schraubenschlüssel als Handhaben zur Verstellung der Stellschraube verwendet werden können, die in üblichen Werkzeugsätzen ohnehin vorhanden sind. Außer dem ist die Verstellung mittels einer Stellschraube technisch einfach zu handhaben. Schließlich eignet sich eine Stellschraube auch zur stufenlosen Verstellung besonders gut. Die Verwendung eines mit der Schraube verbundenen Anlagestempels vermeidet eine punktförmige Anlage des Schraubenendes am Kassettensitz. Der bereite Stempel gewährleistet hingegen eine flächige und damit solide und den Druck verleilende Anlage des Einstellelements an einer Gegenfläche des Kassettensitzes. Die weiter vorgesehene Bahnführung dient als Verdrehsicherung für den Anlagestempel. Auf diese Weise ist eine stets definierte Position des Anlagestempels gegenüber den entsprechenden Gegenflächen am Kassettensitz gewährleistet.

Die rückbezogenen Ansprüche enthalten teilweise vorteilhafte und teilweise für sich selbst erfinderische Weiterbildungen der Erfindung.

Die schraubbare Lagerung der Stellschraube in einer feststehenden Gewindehülse vereinfacht den Aufbau der Werkzeugkassette zusätzlich. Außerdem ist es möglich, in der Außenfläche der Gewindehülse eine Haltenut vorzusehen. Mit Hilfe dieser Haltenut kann die Gewindehülse einfach an der Werkzeugkassette gehalten werden. Beispielsweise können zwei parallellaufende Stifte in zwei einander gegenüberliegende Bereiche der Nut eingreifen und so die Gewindehülse montagetechnisch einfach und auch austauschbar an der Werkzeugkassette sichem.

In einer besonderen Ausführungsform der Erfindung ist vorgesehen, die Gewindesteigung der Stellschraube so zu wählen, dass eine volle Umdrehung der Stellschraube einem vordefinierten Stellschritt entspricht. Im Bereich des Schraubenkopfs können entsprechende Indikatoren beispielsweise Markierungsskalen oder Markierungslinien vorgesehen sein, die dem Bediener das Zurücklegen einer vollständigen Umdrehung der Stellschraube anzeigen. Beispielsweise kann der vordefinierte Schritt 0,05 mm betragen. Mit jeder vollständigen Umdrehung der Stellschraube verändert die Kassette dann ihre Position gegenüber dem Kassettensitz um das Maß von 0,05 mm in der Wirkrichtung der jeweiligen Stellschraube.

Üblicherweise ist es erwünscht, dass die Werkzeugkassette gegenüber dem Kassettensitz translatorisch bewegt wird. Hierfür können die jeweiligen Stellschrauben den Körper der Werkzeugkassette senkrecht durchsetzen. Die Mittellängsachse der Stellschraube verläuft dann in der gewünschten Verstellrichtung. In einer anderen Ausgestaltung ist es aber auch möglich, dass die Stellschraube den Körper der Werkzeugkassette schräg durchsetzt. Bei dieser Ausführungsform ist der Anlagestempel keilförmig ausgestaltet. Der Keilwinkel des Anlagestempels ist hierbei so auf den schrägen Winkel der Stellschraube in der Werkzeugkassette abgestimmt, dass die Anlagefläche des Anlagestempels am Kassettensitz letztlich wiederum eine translatorische Bewegung vollzieht.

Zur sicheren Einstellbarkeit größerer Flächen einer Werkzeugkassette gegenüber der entsprechenden Gegenfläche im Kassettensitz können in vorteilhafter Ausgestaltung mehrere Einstellelemente vorgesehen sein. Diese werden synchron bewegt, um ein gleichbleibendes Verstellen sämtlicher Einstellelemente gegenüber der entsprechenden Gegenfläche des Kassettensitzes zu gewährleisten.

Vorteilhaft ist es, sämtliche Einstellelemente, insbesondere sämtliche Stellschrauben von einer Seite der Kassette her bedienen zu können. Dies ist vor allem vorteilhaft, wenn der Kassettensitz von mehreren Seiten her geschlossen ist. Die Kassette muss dann vor dem Einstellen zum Zwecke der Feinjustierung nicht immer wieder aus dem Kassettensitz des Trägerwerkzeugs entnommen werden.

### Erläuterung der Zeichnungsfiguren:

Anhand eines in den Zeichnungsfiguren dargestellten Ausführungsbeispiels wird die Erfindung weiter erläutert. Es zeigen:
- Fig. 1: eine perspektivische Ansicht einer von ihrer Oberseite her bedienbaren Werkzeugkassette,
- Fig. 2: eine gegenüber Fig. 1 um 180° verdrehte perspektivische Ansicht der in Fig. 1 dargestellten Werkzeugkassette,
- Fig. 3: eine perspektivische Seitenansicht der Werkzeugkassette mit aufgebrochener Seitenwand,
- Fig. 4: eine die Werkzeugkassette im eingebauten Zustand in senkrechter Richtung durchsetzende Stellschraube mit angebrachter Gewindehülse und angebrachtem Anlagestempel,
- Fig. 5: eine die Werkzeugkassette in eingebauten Zustand schräg durchsetzende Stellschraube mit keilförmigem Stempel und mit bereits adaptierter Gewindehülse,
- Fig. 6: die in Fig. 4 gezeigte Einstellschraube in vollständig deaktivierter Stellung,
- Fig. 7: die in Fig. 6 dargestellte Einstellschraube in vorgeschraubter Stellung,
- Fig. 8: perspektivische Ansicht einer von ihrer Unterseite her bedienbaren Werkzeugkassette.

### Beschreibung des Ausführungsbeispiels:

Die Werkzeugkassette 1 ist im Ausführungsbeispiel ein prismatischer, im Wesentlichen quaderartiger Körper. Die eine große Quaderfläche der Werkzeugkassette 1 bildet deren Oberseite 2. Der Oberseite 2 in Verstellrichtung 3 abgewandt ist die Unterseite 4 der Werkzeugkassette 1. Die Unterseite 4 ist von der zweiten großen Quaderfläche gebildet.

Auf der Oberseite 2 ist im Bereich der einen Schmalseite 5 des Quaders die Aufnahme 6 für einen Schneideinsatz freigelassen. Im Ausführungsbeispiel handelt es sich um eine dreieckförmige Aufnahme für eine dreieckförmige Schneidplatte oder Wendeschneidplatte. Die Aufnahme 6 ist zur Fixierung des im Ausführungsbeispiel nicht gezeigten Schneideinsatzes von einer Fixierbohrung 7 durchsetzt. In die Fixierbohrung 7 kann ein Befestigungsmittel zur Befestigung des Schneideinsatzes eingebracht werden.

In der zur Verstellrichtung 3 rechtwinklig verlaufenden Kassettenlängsrichtung 8 ist neben der Aufnahme 6 eine Halteöffnung 9 vorgesehen. Die Halteöffnung 9 durchsetzt die Werkzeugkassette 1 in Verstellrichtung 3. In die Halteöffnung 9 kann ein Befestigungsbolzen oder ein andersartiges Befestigungsmittel eingebracht werden zur Befestigung der Werkzeugkassette 1 in dem in den Zeichnungen nicht dargestellten Kassettensitz des Trägerwerkzeugs.

Schließlich sind auf der Oberseite 2 der Werkzeugkassette1 noch die Schraubenköpfe 10 der Stellschrauben 11 erkennbar. In die Schraubenköpfe 10 ist jeweils ein Innensechskant eingelassen als Angriff für ein Werkzeug mit entsprechend komplementär ausgestalteter Außenkontur.

In die der Schmalseite 5 mit der Aufnahme 6 für den Schneideinsatz abgewandten Schmalseite 5' sind zwei Einführbohrungen 12 vorgesehen. Ebenso sind vier derartige Einführbohrungen auf der die Schmalseiten 5, 5' verbindenden Breitseite 13 der Werkzeugkassette 1 vorgesehen. In die Einführbohrungen 12 sind Haltestifte 14 einführbar. Die Haltestifte 14 greifen im Montageendzustand in zwei einander gegenüberliegende Bereiche von Haltenuten 15 ein, welche in die Außenflächen der Gewindehülsen 16 eingeformt sind. Mit Hilfe der Haltestifte 14 sind die Gewindehülsen 16 in entsprechenden Aufnahmeschächten in der Werkzeugkassette 1 ortsfest fixiert.

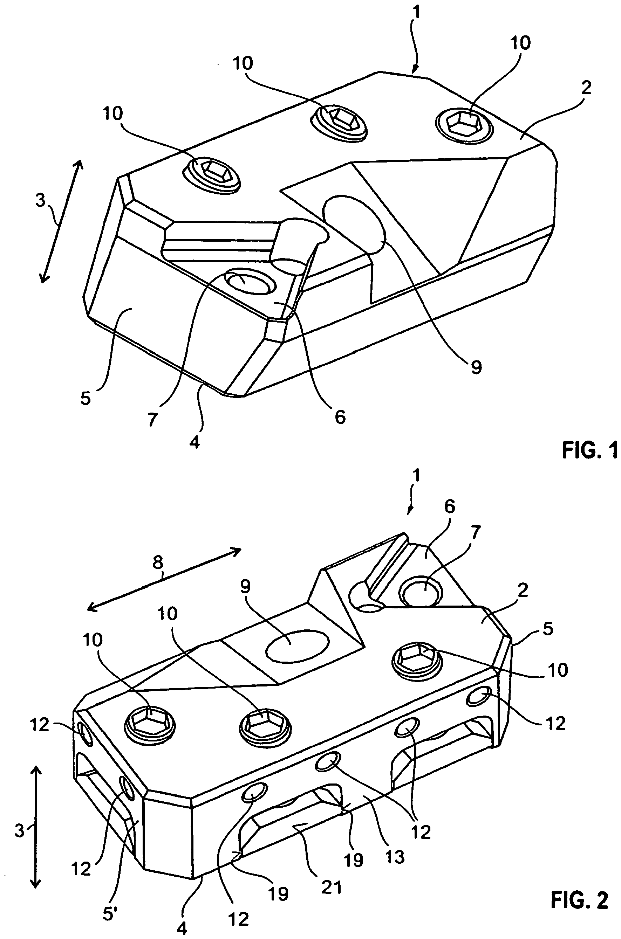

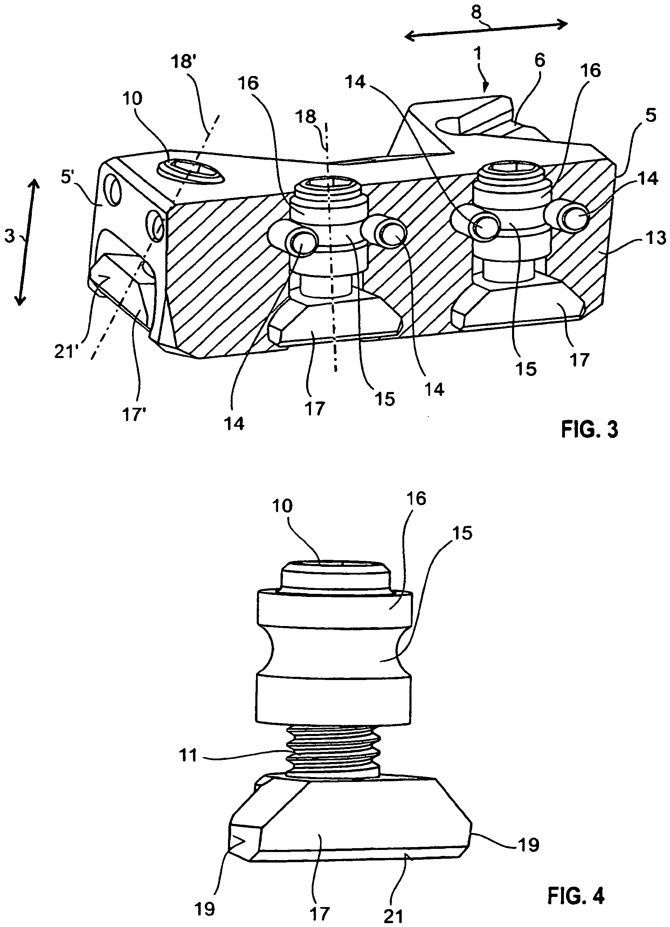

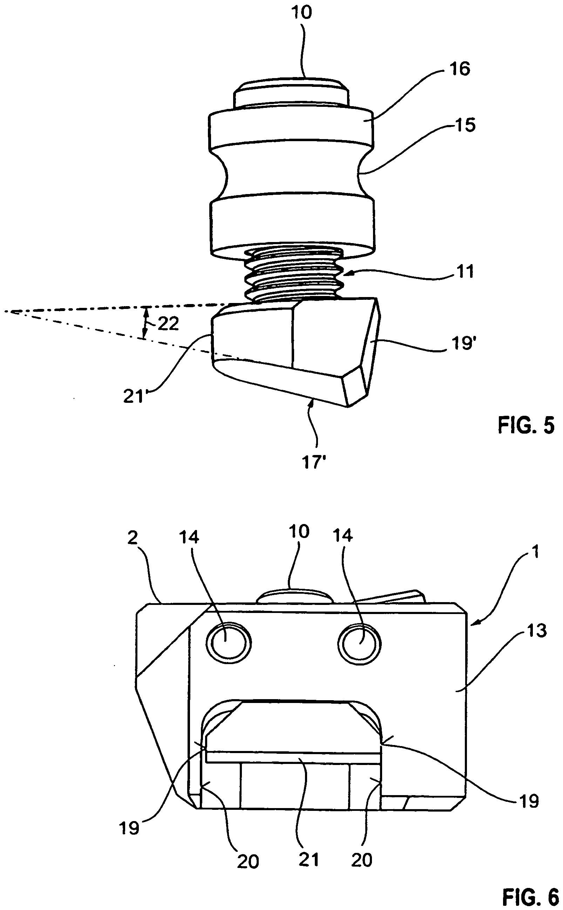

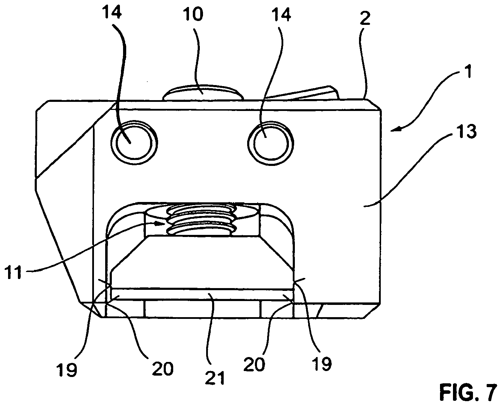

In die Gewindehülsen 16 eingeschraubt sind wiederum die Stellschrauben 11. An ihren den Schraubenköpfen 10 abgewandten Enden tragen die Stellschrauben 11 jeweils die Anlagestempel 17, 17'. Die in der Darstellung der Fig. 2 und Fig. 3 im Bereich der Breitseite 13 angebrachten Stellschrauben 11 mit ihren Anlagestempeln 17 durchsetzen den Körper der Werkzeugkassette 1 senkrecht, nämlich in Verstellrichtung 3. Die Mittellängsachse 18 dieser Stellschrauben 11 verläuft also ebenfalls in Verstellrichtung 3. Die Anlagestempel 17 sind, was in Fig. 6 und Fig. 7 gut erkennbar ist, mit ihren Seitenflächen 19 an Führungsflächen 20 des Aufnahmeschachts für jeweilige Stellschraube 11 und den jeweiligen Anlagestempel 17 geführt. Die Seitenflächen 19 und die Führungsflächen 20 bilden somit eine Bahnführung aus. Rechtwinklig zu den Seitenflächen 19 verläuft die Anlagefläche 21 der Anlagestempel 17. Mit ihrer Anlagefläche 21 liegen die Anlagestempel 17 im Montageendzustand auf der entsprechenden Gegenfläche des Kassettensitzes auf. Aus der Darstellung der Fig. 2 und Fig. 3 ist weiterhin erkennbar, dass die der Breitseite 13 zugeordneten Anlagestempel 17 im Montageendzustand an derselben Gegenfläche des Kassettensitzes anliegen. Die Stellschrauben 11 mit den Anlagestempeln 17 sind nur zur synchronen Verstellung ausgelegt. Dies bedeutet, dass beide Stellschrauben 11 stets um denselben Verstellweg, also um dieselbe Umdrehungszahl gegenüber dem Körper der Werkzeugkassette 1 verstellt werden müssen.

Schließlich ist auch beim Ausführungsbeispiel die Gewindesteigung der Stellschrauben 11 so gewählt, dass eine vollständige Umdrehung einer jeden Stellschraube 11 bzw. eines jeden Schraubenkopfs 10 mit einer Verstellung der Anlageflächen 21 der Anlagestempel 17 um 0,05 mm gleichbedeutend ist. Durch Anbringen von Markierungslinien mittels Laserbeschriftung ist eine skalierte Einstellung gewährleistet.

Anders verhält es sich mit der Funktion des auf der Schmalseite 5' angeordneten Anlagestempels 17', der in Fig. 5 noch einmal gezeigt ist. Aus der Darstellung der Fig. 3 ist erkennbar, dass die Mittellängsachse 18' der dem Anlagestempel 17' zugeordneten Stellschraube 11 sowohl zur Verstellrichtung 3 als auch zur Kassettenlängsrichtung 8 schräg verläuft. Die Anlagefläche 21' des Anlagestempels 17' ist auch nicht auf der dem Schraubenkopf 10 abgewandten Seite angebracht. Vielmehr ist die Anlagefläche 21' seitlich am Anlagestempel 17' angebracht, wie dies aus der Darstellung der Fig. 5 ersichtlich ist. Der Anlagestempel 17' ist nämlich keilförmig. Er weist hierfür den Keilwinkel 22 auf. Mit seiner Seitenfläche 19' ist der Anlagestempel 17' in seinem Aufnahmeschacht so geführt, dass er beim Hineinschrauben des Schraubenkopfs 10 in Kassettenlängsrichtung 8 aus der Schmalseite 5' der Werkzeugkassette 1 immer weiter hinaussteht, um die Werkzeugkassette 1 gegenüber dem nicht dargestellten Kassettensitz im Trägerwerkzeug in Kassettenlängsrichtung 8 zu verschieben.

Aus der Zusammenschau der Zeichnungsfiguren, insbesondere der Zusammenschau der Fig. 1 und Fig. 2 ist schließlich erkennbar, dass sämtliche Schraubenköpfe 10 sämtlicher Stellschrauben 11 von der Oberseite 2 her bedienbar sind. Die Oberseite 2 ist somit zugleich die Bedienseite der Werkzeugkassette 1.

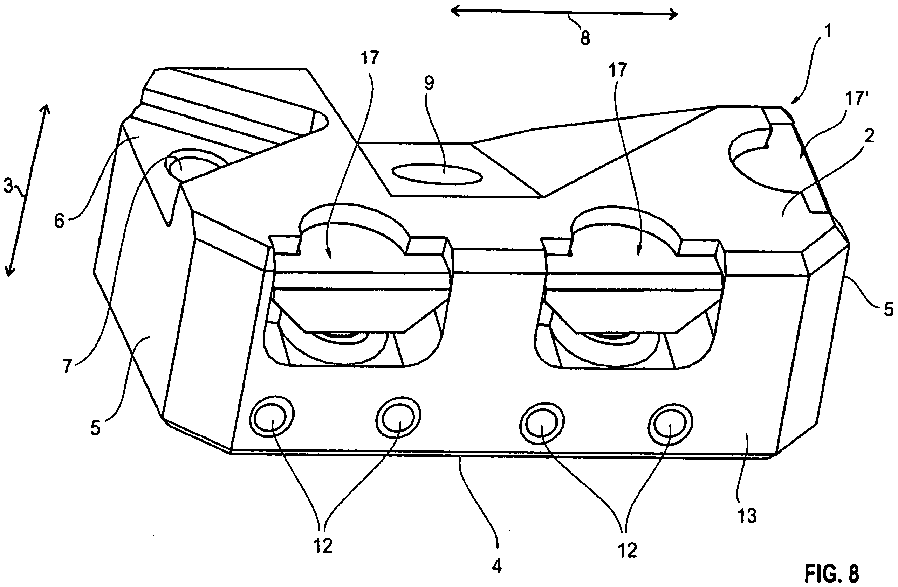

Die Fig. 8 zeigt eine weitere Variante der erfindungsmäßigen Werkzeugkassette 1. Bei dieser Variante bildet die Unterseite 4 die Bedienseite. Während auf der Oberseite 2 weiterhin die Aufnahme 6 für den Schneideinsatz und die Halteöffnung 9 zur Einbringung eines Befestigungsmittels für die Werkzeugkassette 1 am Trägerwerkzeug angeordnet ist, sind die Schraubenköpfe 10 der Stellschrauben 11 auf der Unterseite 4 und in Fig. 8 nicht sichtbar angeordnet. Entsprechend zu den auf der Unterseite 4 angeordneten Schraubenköpfen 10 sind bei der in Fig. 8 gezeigten Ausführungsform die Anlagestempel 17, 17' im Bereich der Oberseite 2 angeordnet. Nach der Erfindung ist es also möglich, sowohl eine von der Oberseite 2 her als auch eine von der Unterseite 4 her bedienbare Werkzeugkassette 1 zu realisieren. Vorteil der in Fig. 8 dargestellten Ausführungsform mit von der Unterseite 4 bedienbaren Stellschrauben 11 ist die Tatsache, dass die Anlagestempel 17 auf derselben Höhe wie die Schneide des in die Aufnahme 6 eingesetzten Schneideinsatzes liegen. Die Feinjustierung der Werkzeugkassette 1 er folgt somit sehr nahe dem Schneideinsatz und damit sehr nahe an der Wirkstelle des Trägerwerkzeugs mit dem zu bearbeitenden Werkstück.

## Patentansprüche

1. Werkzeugkassette (1) mit einer Aufnahme (6) für einen auswechselbaren Schneideinsatz mit
mindestens ein Einstellelement an der Werkzeugkassette (1) zur Einstellung der Position der Werkzeugkassette (1) gegenüber einem Kassettensitz eines Trägenererkzeugs sowie eine Stellschraube (11) als Einstellelement **gekennzeichnet durch** einen am Schraubenende fixierten Anlagestempel (17, 1T) als Anlagefläche gegenüber dem Kassettensitz und eine Bahnführung mit mindestens zwei Führungsflächen (20), an welchen jeweils eine Seitenfläche (19, 19') des Anlagestempels (17, 17') gleitend geführt ist.

2. Werkzeugkassette (1) nach Anspruch 1
**gekennzeichnet durch**
eine feststehende Gewindehülse (16), in welcher die Stellschraube (11) beweglich schraubbar gelagert ist.

3. Werkzeugkassette (1) nach einem der Ansprüche 1 oder 2
**gekennzeichnet durch**
eine Gewindesteigung der Stellschraube (11) derart, dass eine volle Umdrehung der Stellschraube (11) einem vordefinierten Stellschritt des Einstellelements entspricht.

4. Werkzeugkassette (1) nach einem der Ansprüche 1 bis 3.
**dadurch gekennzeichnet,**
**dass** die Stellschraube (11) den Körper der Werkzeugkassette (1) senkrecht durchsetzt.

5. Werkzeugkassette (1) nach einem der Ansprüche 1 bis 4.
**dadurch gekennzeichnet,**
**dass** die Stellschraube (11) den Körper der Werkzeugkassette (1) in einem schrägen Winkel durchsetzt und dass der Anlagestempel (17, 17') keilförmig ist mit einem an den schrägen Winkel angepassten Keilwnkel (22) zur Realisierung einer translatorischen Bewegung der Anlagefläche (21, 21') des Anlagestempels (17, 17') gegenüber der Werkzeugkassette (1).

6. Werkzeugkassette (1) nach einem der Ansprüche 1 bis 5
**gekennzeichnet durch**
zwei oder mehrere synchron bewegbare Einstellelemente zur gleichbleibenden Verstellung der Position der Werkzeugkassette (1) gegenüber einer Gegenanlagefläche des Kassettensitzes.

7. Werkzeugkassette (1) nach einem der Ansprüche 1 bis 6
**dadurch gekennzeichnet,**
**dass** sämtliche Einstellelemente von einer Seite der Werkzeugkassette (1) her bedienbar sind.

## Claims

1. Tool cassette (1) having a receiver (6) for an exchangeable cutting insert, having at least one setting element on the tool cassette (1), for the purpose of setting the position of the tool cassette (1) in relation to a cassette seat of a carrier tool, and a setscrew (11) as a setting element, **characterized by** a seating plug (17, 17'), fixed to the end of the screw, as a seating face in relation to the cassette seat and a path guide having at least two guide faces (20), on which respectively one lateral face (19, 19') of the seating plug (17, 17') is guided in a sliding manner.

2. Tool cassette (1) according to Claim 1, **characterized by** a fixed threaded bush (16), in which the setscrew (11) is movably mounted such that it can be screwed.

3. Tool cassette (1) according to Claim 1 or 2, **characterized by** a thread pitch of the setscrew (11) such that a full turn of the setscrew (11) corresponds to a predefined setting step of the setting element.

4. Tool cassette (1) according to any one of Claims 1 to 3, **characterized in that** the setscrew (11) extends perpendicularly through the body of the tool cassette (1).

5. Tool cassette (1) according to any one of Claims 1 to 4, **characterized in that** the setscrew (11) extends at an oblique angle through the body of the tool cassette (1), and the seating plug (17, 17') is wedge-shaped and has a wedge angle (22) matched to the oblique angle for the purpose of realizing a translational movement of the seating face (21, 21') of the seating plug (17, 17') in relation to the tool cassette (1).

6. Tool cassette (1) according to any one of Claims 1 to 5, **characterized by** two or more synchronously movable setting elements for constant adjustment of the position of the tool cassette (1) in relation to a mating seating face of the cassette seat.

7. Tool cassette (1) according to any one of Claims 1 to 6, **characterized in that** all setting elements can be operated from one side of the tool cassette (1).

## Revendications

1. Magasin d'outils (1) comportant un logement (6) pour un insert de coupe interchangeable avec au moins un élément de réglage sur le magasin d'outils (1) pour le réglage de la position du magasin d'outils (1) par rapport à un siège de magasin d'un outil de support ainsi qu'une vis de réglage (11) comme élément de réglage, **caractérisé par** un patin d'appui (17, 17') fixé à l'extrémité de la vis comme face d'appui par rapport au siège de magasin et un guidage de trajectoire avec au moins deux faces de guidage (20), sur lesquelles une face latérale (19, 19') du patin d'appui (17, 17') est respectivement guidée.

2. Magasin d'outils (1) selon la revendication 1, **caractérisé par** une douille filetée stationnaire (16), dans laquelle la vis de réglage (11) est logée de façon mobile par vissage.

3. Magasin d'outils (1) selon la revendication 1 ou 2, **caractérisé par** un pas de filet de la vis de réglage (11) de telle manière qu'une révolution complète de la vis de réglage (11) corresponde à une avance de réglage prédéfinie de l'élément de réglage.

4. Magasin d'outils (1) selon l'une quelconque des revendications 1 ou 3, **caractérisé en ce que** la vis de réglage (11) traverse perpendiculairement le corps du magasin d'outils (1).

5. Magasin d'outils (1) selon l'une quelconque des revendications 1 à 4, **caractérisé en ce que** la vis de réglage (11) traverse le corps du magasin d'outils (1) sous un angle d'obliquité et **en ce que** le patin d'appui (17, 17') est réalisé en forme de coin avec un angle de coin (22) adapté à l'angle d'obliquité pour réaliser un mouvement de translation de la face d'appui (21, 21') du patin d'appui (17, 17') par rapport au magasin d'outils (1).

6. Magasin d'outils (1) selon l'une quelconque des revendications 1 à 5, **caractérisé par** deux éléments de réglage déplaçables de façon synchrone, ou plus, pour le réglage invariable de la position du magasin d'outils (1) par rapport à une face d'appui opposée du siège de magasin.

7. Magasin d'outils (1) selon l'une quelconque des revendications 1 à 6, **caractérisé en ce que** tous les éléments de réglage peuvent être manoeuvrés depuis un côté du magasin d'outils (1).
